# DEMANDE DE BREVET EUROPEEN

(11) **EP 0 832 919 A1**
(43) Date de publication de la demande: **01.04.1998**
(21) Numéro de dépôt: 97402095.0
(22) Date de dépôt: 09.09.1997
(51) Int. Cl.: C08J 9/236, C08J 9/28

(54) **Procédé d'ignifugation du polystyrène expansé**

(30) Priorité: 30.09.1996 FR 9611881
(71) Demandeur: Knauf, 68600 Wolfgantzen (FR)
(72) Inventeur: Hassenforder, Maurice, 68190 Ensisheim (FR)
(74) Mandataire: Rousset, Jean-Claude

(57) **Abrégé**

On mélange des billes de polystyrène expansées et une solution aqueuse de silicate de sodium, et on sèche le mélange obtenu dans un moule pour obtenir un panneau dans lequel chaque bille est complètement enrobée d'une mince couche de silicate qui la protège contre le feu tout en la liant mécaniquement aux billes voisines pour assurer la rigidité du panneau.

## Description

L'invention concerne la réalisation d'un corps en polystyrène expansé ignifugé utilisable en tant qu'élément résistant au feu, notamment dans le bâtiment, où le polystyrène expansé est largement utilisé en raison de ses qualités d'isolant phonique et thermique.

Un procédé connu pour limiter la sensibilité au feu du polystyrène expansé consiste à incorporer aux billes de polystyrène, avant leur agglomération, des agents ignifugeants tels que des métaux lourds ou des produits bromés et/ou colorés qui offrent théoriquement une bonne résistance aux flammes.

En cas d'incendie, la nature de l'agent ignifugeant et le fait qu'il est dispersé au sein du polystyrène entraînent un certain nombre d'inconvénients:
- les éléments de polystyrène dégagent des vapeurs toxiques, en particulier des produits chlorés et/ou bromés,
- les billes fondent et le feu peut se propager à l'aide des gouttes enflammées qui tombent vers des zones encore épargnées par l'incendie.

Ces inconvénients sont majeurs, puisqu'il vont à l'encontre de la fonction d'ignifugation initialement prévue en:
- augmentant la difficulté d'intervention humaine contre le feu, du fait des dégagements toxiques,
- déplaçant et étendant les foyers d'incendie.

Pour remédier à ces inconvénients, on a recherché une technique d'ignifugation permettant de mettre le polystyrène à l'abri des flammes.

A cet effet, dans le procédé selon l'invention:
a) on mélange des billes de polystyrène déjà expansées et un milieu liquide ou pâteux contenant un agent ignifugeant, de façon à enrober complètement chaque bille d'une mince couche dudit milieu; et
b) on soumet le mélange obtenu à un traitement propre à transformer ledit milieu en agent ignifugeant à l'état solide, les couches d'enrobage des différentes billes se liant entre elles pour former un corps rigide tout en maintenant les billes écartées les unes des autres.

L'agent ignifugeant sous forme de couches minces constitue un écran continu qui empêche tout contact direct entre les flammes et le polystyrène et évite ainsi la formation de gouttes de polystyrène séparées du corps.

Il est déjà connu d'enrober par un liant des billes de polystyrène préalablement expansées, notamment pour la fabrication de béton ou de mortier allégé. Dans ce cas, les espaces qui subsistent entre les billes sont occupés en totalité par le liant, ce qui a pour conséquence d'augmenter sensiblement la masse volumique du produit fini, celui-ci ne présentant plus les caractéristiques d'isolation habituellement demandées aux éléments en polystyrène expansé dans le bâtiment.

Au contraire, dans la présente invention, l'agent ignifugeant est présent sous forme d'une couche très fine ce qui limite l'accroissement de la masse volumique du produit et laisse subsister des espaces vides entre les billes.

Le procédé selon l'invention n'affecte pas non plus la résistance thermique par rapport au polystyrène non ignifugé.

En revanche, la résistance mécanique des éléments est améliorée, notamment en compression, et leur usinage est facilité. De plus, les éléments résistent aux corps incandescents, et ils ne sont pas attaqués par les rongeurs, contrairement aux éléments en polystyrène habituellement utilisés dans le bâtiment pour lesquels l'action des rongeurs constitue un inconvénient.

Des caractéristiques optionnelles de l'invention, complémentaires ou alternatives, sont énoncées ci-après:
- On choisit un agent ignifugeant qui, lors d'un incendie, ne brûle pas, ne dégage pas de vapeurs nocives et ne forme pas de gouttes.
- L'agent ignifugeant est exempt de métaux lourds et d'halogènes.
- L'agent ignifugeant est à base de silicates alcalins, notamment de sodium.
- L'agent ignifugeant est une résine thermodurcissable, notamment une résine phénolique.
- On mélange en volume 95 à 99,5% de billes de polystyrène et 5 à 0,5% dudit milieu.
- Ledit milieu contient l'agent ignifugeant dissous dans un solvant et ledit traitement comprend la vaporisation dudit solvant.
- Ledit solvant est l'eau et ledit traitement provoque une expansion supplémentaire des billes, due à la vapeur d'eau dégagée. Les billes s'imbriquent alors les unes dans les autres, tout en restant séparées les unes des autres par l'enrobage d'agent ignifugeant, ce qui a pour effet d'améliorer les propriétés du produit fini.
- La solution d'agent ignifugeant contient en outre un agent mouillant.
- L'agent mouillant est un savon liquide.
- Ledit traitement comporte l'exposition du mélange à des micro-ondes.
- On soumet le mélange audit traitement dans un moule qui lui impartit la forme du corps à réaliser.

L'invention a également pour objet un corps en polystyrène expansé ignifugé tel qu'on peut l'obtenir par le procédé défini ci-dessus, comprenant une multiplicité de billes de polystyrène expansées complètement enrobées, et séparées les unes des autres, par des couches minces respectives d'un agent ignifugeant à l'état solide, l'ensemble desdites couches formant une structure continue qui confère audit corps sa rigidité.

Dans le cas où on utilise comme milieu d'enrobage une solution aqueuse de silicate de sodium, celle-ci présente avantageusement un rapport pondéral SiO₂/Na₂O supérieur ou égal à 2, une masse volumique à 20°C supérieure ou égale à 1,3 kg/l, une viscosité dynamique à 20°C comprise entre 0,04 et 0,9 Pa.s. Il est en outre préférable que la solution contienne, en poids, au moins 20% de SiO₂, au moins 5% de Na₂O et au moins 50% d'eau.

D'autres agents ignifugeants peuvent être utilisés, notamment des résines thermodurcissables et plus particulièrement les résines phénoliques. En cas de traitement par micro-ondes, la résine doit être choisie parmi celles qui se prêtent à un tel traitement.

Certains agents ignifugeants, parmi lesquels le silicate de sodium, présentent l'avantage de cristalliser au contact d'un corps incandescent, formant ainsi une sorte de gangue protectrice autour de chaque bille de polystyrène.

Dans certains cas, il est utile d'ajouter au milieu d'enrobage, pour améliorer son pouvoir mouillant, au moins un agent mouillant tel qu'un savon ou un sel d'acide gras sous forme liquide. Un bon mouillage des billes est en effet essentiel pour obtenir un enrobage complet et homogène de l'ensemble des billes, qui permettra d'une part de protéger chacune d'elles en la dotant d'une enveloppe ignifugeante, d'autre part d'empêcher le feu de se propager d'une bille à l'autre si d'aventure l'une d'elle prenait feu. L'agent mouillant est ajouté à raison de 0,05% à 1% sur la base du volume total du mélange formé par les billes et le milieu d'enrobage.

Outre l'action de la vapeur d'eau sur l'expansion du polystyrène, l'utilisation d'une solution aqueuse d'agent ignifugeants, associée au séchage par micro-ondes, permet d'obtenir un séchage très rapide, et par conséquent une cadence de production élevée.

Le procédé selon l'invention permet notamment de réaliser des éléments en forme de plaque, c'est-à-dire ayant une dimension (épaisseur) petite par rapport aux deux autres.

La masse volumique des éléments obtenus est légèrement supérieure à celle des éléments analogues moulés de façon traditionnelle sans agent ignifugeant. Ainsi, le choix d'un produit de base d'une masse volumique de 10 g/l aboutit à un produit fini selon l'invention d'une masse volumique comprise entre 35 et 200 g/l. De telles valeurs conviennent encore parfaitement pour l'utilisation courante des panneaux dans le bâtiment.

Un exemple non limitatif de mise en oeuvre de l'invention est décrit ci-après.

A 20 cm³ d'une solution de silicate de sodium contenant en poids 30,6% de SiO₂, 15% de Na₂O et 54,4% de H₂O et ayant une viscosité à 20°C de 0,5 à 0,8 Pa.s, on ajoute un 1 cm³ de savon liquide. On introduit dans un mélangeur la solution obtenue, puis 1 litre de billes de polystyrène expansées. On brasse pendant quelques minutes afin d'obtenir un enrobage complet et homogène des billes de polystyrène. On verse le mélange dans un moule en PVC dont la cavité a pour dimensions 300 x 300 x 40 mm, on place le moule dans un four à micro-ondes, que l'on fait fonctionner à la puissance de 1300 W pendant 4 mn.

La plaque obtenue est démoulée immédiatement.

## Revendications

1. Procédé pour réaliser un corps en polystyrène expansé ignifugé, dans lequel:
a) on mélange des billes de polystyrène déjà expansées et un milieu liquide ou pâteux contenant un agent ignifugeant et un agent mouillant, de façon à enrober complètement chaque bille d'une mince couche dudit milieu; et
b) on soumet le mélange obtenu à un traitement propre à transformer ledit milieu en agent ignifugeant à l'état solide, les couches d'enrobage des différentes billes se liant entre elles pour former un corps rigide tout en maintenant les billes écartées les unes des autres,
caractérisé en ce que l'agent mouillant est un savon liquide et que ledit traitement comporte l'exposition du mélange à des micro-ondes, le produit fini obtenu ayant une masse volumique comprise entre 35 et 200 g/l.

2. Procédé selon la revendication 1, dans lequel on choisit un agent ignifugeant qui, lors d'un incendie, ne brûle pas, ne dégage pas de vapeurs nocives et ne forme pas de gouttes.

3. Procédé selon l'une des revendications 1 et 2, dans lequel l'agent ignifugeant est exempt de métaux lourds et d'halogènes.

4. Procédé selon la revendication 3, dans lequel l'agent ignifugeant est à base de silicates alcalins.

5. Procédé selon la revendication 3, dans lequel l'agent ignifugeant est une résine thermodurcissable, notamment une résine phénolique.

6. Procédé selon l'une des revendications précédentes, dans lequel on mélange en volume 95 à 99,5% de billes de polystyrène et 5 à 0,5% dudit milieu.

7. Procédé selon l'une des revendications précédentes, dans lequel ledit milieu contient l'agent ignifugeant dissous dans un solvant et ledit traitement comprend la vaporisation dudit solvant.

8. Procédé selon la revendication 7, dans lequel ledit solvant est l'eau et ledit traitement provoque une expansion supplémentaire des billes.

9. Procédé selon l'une des revendications précédentes, dans lequel on soumet le mélange audit traitement dans un moule qui lui impartit la forme du corps à réaliser.
